# EUROPEAN PATENT SPECIFICATION

(11) **EP 2 799 799 B1**
(45) Date of publication and mention of the grant of the patent: **01.02.2017**
(21) Application number: 12861749.5
(22) Date of filing: 21.12.2012
(51) Int. Cl.: F27D 7/02, F27D 7/04, F27D 11/08, F27D 11/10, F27D 13/00, F27D 17/00, C21C 5/52, F27B 3/08, F27B 3/18, F27B 3/20, F27B 3/22, F27B 3/10

(54) **ARC FURNACE**
LICHTBOGENOFEN
FOUR À ARC

(30) Priority: 27.12.2011 JP 2011285772
(43) Date of publication of application: 05.11.2014
(73) Proprietor: JP Steel Plantech Co., Kohoku-ku Yokohama 222-0033 (JP)
(72) Inventor: AO Norio, Yokohama-shi, Kanagawa 221-0056 (JP)
(74) Representative: Hoffmann Eitle
(86) International application number: PCT/JP2012/083273
(87) International publication number: WO 2013/099807

(56) References cited:
- EP-A2- 2 107 327
- WO-A1-2011/013726
- JP-A- H1 054 675
- JP-A- 2000 292 064
- JP-A- 2002 156 186
- JP-A- 2002 168 417

## Description

### [Technical Field]

The present invention relates to an arc furnace for melting iron scrap or the like by electric arcs.

### [Background Art]

An arc furnace (also referred to as "electric furnace") is a facility, in which, in general, solid metal material is charged into a furnace and electrodes are inserted into the furnace and energized to melt the solid metal material by electric arcs. In the case of a steel-making arc furnace, which is a typical arc furnace, used as the material are iron scrap, direct reduced iron (DRI), hot briquetted iron (HBI) obtained by briquetting or compacting the DRI at a high temperature, cold pig iron (mold pig iron), etc.

In such an arc furnace, a large amount of electric power is consumed to melt the material. However, in an arc furnace, of the entire heat input given by the electric power input, oxygen blowing burners, etc., the part of the heat actually used is approximately 65% to 75%. Approximately 15% to 25% of the entire heat input is discharged in the form of the sensible heat of exhaust gas.

For this reason, a number of methods of melting the scrap while preheating the scrap by the exhaust gas produced in the furnace during melting in order to minimize the required electric power have been proposed.

Patent Document 1, for example, describes a technology, in which a preheating chamber is provided separately from an arc furnace and material is charged into the arc furnace after being preheated using exhaust gas in the preheating chamber.

In Patent Document 2, a technology is proposed, in which the furnace body itself of the arc furnace is used as a preheating vessel, that is, the exhaust gas discharged from another arc furnace is introduced through an upper portion of the furnace body and is discharged through a plurality of exhaust ports in a side portion of the furnace body to preheat the material and then, operation of the arc furnace is performed using the furnace body.

### [Prior Art Document]

### [Patent Document]

Patent Document 1: Japanese Patent Publication No. S59-52359
Patent Document 2: Japanese Patent Application Publication No. S59- 122886 (JP 59-122886 A)

WO 2011/013726 A1 relates to an arc melting equipment used for melting an iron source with a high heat efficiency and capable of controlling the supply of the iron source supplied from a preheat chamber to a melting chamber, and also provided is a molten metal operation method using the arc melting equipment. The arc melting equipment comprises a melting chamber for melting an iron source, a shaft-type preheat chamber provided so as to be directly coupled to the melting chamber, and an electrode. In the arc melting equipment, at least part of the bottom surface of the preheat chamber is formed as a sloped bottom surface having a slope descending toward the melting chamber. A shaft front dimension is set to the optimum value for controlling the supply of the iron source. A pushing-out device for moving the iron source in the preheat chamber toward the melting chamber is provided at a lower part of the preheat chamber. Driving the pushing-out device allows the iron source to be supplied from the preheat chamber to the melting chamber, and stopping the driving of the pushing-out device stops the supply of the iron source supplied from the preheat chamber to the melting chamber. The optimum value of the shaft front dimension is set so that for the maximum length of the iron source, the relationship A ≤ H ≤ 4A is satisfied. EP 2 107 327 A2 is further prior art.

### [Summary of Invention]

### [Problems to be Solved by the Invention]

With regard to the technology described in Patent Document 1, there is a problem that it is necessary to provide a new facility, preheating chamber, which increases costs and in addition, it is necessary to introduce the exhaust gas via water-cooled ducts, so that the sensible heat of the exhaust gas cannot be fully used. Moreover, since oil etc. is attached to the material, supplying the exhaust gas to the material causes white smoke with a bad smell to occur, which is unfavorable for work environment.

Although such a problem does not arise in the case of the technology described in Patent Document 2, when the furnace body itself of the arc furnace is used as a preheating chamber, the arc furnace cannot operate during preheating the material, which reduces efficiency.

The present invention has been made under such circumstances and an object of the present invention is to provide an arc furnace that makes it possible to perform both preheating of the material and melting operation in the arc furnace at the same time at low cost without significantly changing an existing facility.

### [Means for Solving the Problems]

In order to solve the above problem, the present invention provides an arc furnace for melting material by electric arcs formed by energizing an arc electrode, including: a furnace body configured to be charged with the material to be melted; a furnace roof that closes an upper opening of the furnace body; the arc electrode that is inserted into the furnace body from above the furnace roof and is energized to form the electric arcs to melt the material; and an exhaust port, through which exhaust gas in the furnace body is discharged, wherein: the arc electrode is arranged so that a center of arc heating is laterally offset from a center of the furnace body in a horizontal plane with respect to the furnace body; the exhaust port is provided in a side wall of the furnace body on a side opposite to an offset direction of the arc electrode, in which direction the arc electrode is offset, at a height below a level, to which the material is to be present; and the exhaust gas produced by the arc heating by the arc electrode is discharged from the exhaust port through spaces between lumps of the material charged into the furnace body.

In the present invention, it is preferable that a plurality of the exhaust ports be provided to perform at least one of switching among the exhaust ports and regulating of a quantity of exhaust gas discharged from each exhaust port. It is preferable that the furnace body have a quasi-closed structure in a state where the furnace roof is placed. It is preferable that the arc furnace further include a lance for blowing O₂ gas into molten metal formed by the melting by the electric arcs from the arc electrode. It is preferable that carbon material be injected via the lance or another lance. It is preferable that the arc furnace further include a burner, provided in the side wall of the furnace body, for heating the material in the furnace body. It is preferable that the arc furnace further include a gas blowing member, provided in a bottom portion of the furnace body, for blowing agitating gas into the molten metal formed by melting the material in the furnace body.

It is preferable that operation be performed so that all the material of one batch is charged at a time without additional charge. It is preferable that the arc furnace further include a charging chamber, provided beside the furnace body, for charging the material having a bulk density of at least 1.0 ton/m³, wherein the material having the bulk density of at least 1.0 ton/m³ is charged from the charging chamber into the furnace body through the exhaust port. In this case, it is preferable that the charging chamber be provided next to the side wall of the furnace body, in which the exhaust port is formed, and the material having the bulk density of at least 1.0 ton/m³ and charged therein is preheated by the exhaust gas discharged through the exhaust port.

### [Effects of Invention]

According to the present invention, the arc electrode is arranged so that the center of arc heating is laterally offset from the center of the furnace body in a horizontal plane with respect to the furnace body and the exhaust gas in the furnace body is discharged through the exhaust port that is provided in the side wall of the furnace body on the side opposite to the offset direction of the arc electrode at a height below the level, to which the material is present. Thus, the heat of the exhaust gas heated to a high temperature by arc heating, supply of O₂ gas via the lance, the burner, etc., is absorbed by the material not melted and contributes to the preheating of the material, so that it is possible to effectively use the high-temperature gas flow to reduce the electric power consumption rate. Moreover, it suffices to change the position of insertion of the arc electrode and the position of the exhaust port as compared to the conventional arc furnace, so that it is not required to significantly change the existing facility.

### [Brief Description of Drawings]

[FIG. 1] FIG. 1 is a vertical section showing an arc furnace according to an embodiment of the present invention.
[FIG. 2] FIG. 2 is a horizontal section showing the arc furnace according to the embodiment of the present invention.
[FIG. 3A] FIG. 3A is a schematic vertical section for explaining an effect of the present invention.
[FIG. 3B] FIG. 3B is a schematic horizontal section for explaining the effect of the present invention.
[FIG. 4] FIG. 4 is a vertical section showing an arc furnace according to another embodiment of the present invention.
[FIG. 5] FIG. 5 is a vertical section showing an arc furnace according to still another embodiment of the present invention.

### [Embodiment for Carrying Out the Invention]

An embodiment of the present invention will now be described with reference to the drawings.

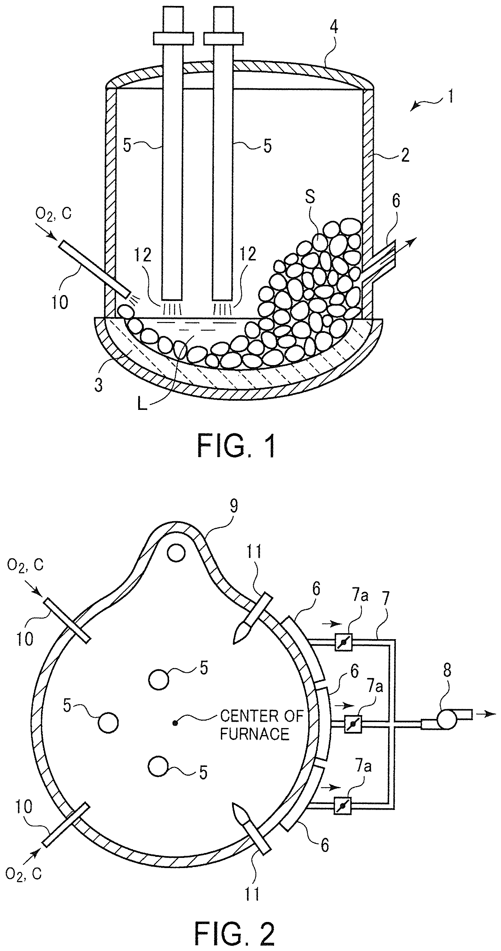

FIG. 1 is a vertical section showing an arc furnace according to an embodiment of the present invention and FIG. 2 is a horizontal section thereof. The arc furnace is an alternate-current (AC) steel-making arc furnace. The arc furnace includes a furnace body 1 for arc-heating and melting iron-based material, such as iron scrap. The furnace body 1 includes a cylindrical, water-cooled wall portion (furnace shell) 2 and a bottom portion 3 lined with a refractory material. In order to reduce heat loss, it is preferable that the wall portion 2 be lined with a refractory material.

An upper opening of the furnace body 1 is closed by a furnace roof 4. In a state where the furnace roof 4 is placed, three arc electrodes 5 are vertically inserted from above the furnace roof 4 to the vicinity of the bottom portion 3 in the furnace body 1. The furnace body 1 is preferably configured so that, in a state where the furnace roof 4 is placed, the furnace body 1 is closed except the space between the furnace roof 4 and the wall portion (furnace shell) 2 and the space between the arc electrodes 5 and the electrode holes so as to cause the furnace body 1 to have a quasi-closed structure that minimizes the entrance of the outside air. In order to reduce heat loss, it is preferable that the inside of the furnace roof 4 be lined with a refractory material. The charge of material, such as scrap, into the furnace body 1 is performed via a bucket, with the furnace roof 4 and the arc electrodes 5 removed.

The three arc electrodes 5 are made of graphite and are energized to generate electric arcs from the tip portions thereof, to melt the material S, such as iron scrap. The arc electrodes 5 are arranged so that the center of arc heating is laterally offset from the center of the furnace body 1 in a horizontal plane with respect to the furnace body 1.

Meanwhile, exhaust ports 6 are provided in a side wall of the furnace body 1 on a side opposite to the offset direction of the arc electrodes 5, in which direction the arc electrodes 5 are offset, at a height below the level, to which the material is to be charged. The exhaust ports 6 (three in the example shown in the figures) are arranged along a circumferential direction of the furnace body 1. Exhaust gas passes through the exhaust ports 6 and exhaust ducts 7 and is sent to a dust collector (not shown) by a fan 8. The exhaust ducts 7 for the respective exhaust ports 6 are each provided with a damper 7a, which makes it possible to perform at least one of switching among the exhaust ports 6 and regulating of the quantity of the exhaust gas discharged from each exhaust port 6. This makes it possible to control the preheating of the material S. A tap hole 9, through which molten metal is discharged after being melt by electric arcs is provided in the bottom portion 3 of the furnace body 1.

The furnace body 1 is provided with lances 10 for supplying O₂ gas and injecting carbon material into the furnace body 1. Note that although two lances 10 are drawn in FIG. 2, the number of the lances is not limited. Although in this embodiment, the O₂ gas and the carbon material are blown or injected into the furnace body 1 through the lances 10, these may be supplied through individual lances, separately.

The side wall of the furnace body 1 is provided with burners 11. The arc furnace is designed so that melting the material S in a region, in which the speed of melting is slow, is accelerated by the combustion heat obtained via the burners 11, so that remaining of the material S due to the offsetting of the arc electrodes 5 is made up for. Note that although the two burners 11 are drawn in FIG. 2, the number of the burners is not limited.

Next, description will be given of operation of the arc furnace configured as described above.

First of all, the material S is charged into the furnace body 1 via a bucket (not shown), with the furnace roof 4 removed. Iron scrap, direct reduced iron (DRI), hot briquetted iron (HBI) obtained by briquetting or compacting the DRI at a high temperature, cold pig iron (mold pig iron), automobile shredder residue (ASR), etc. are used as the material S. In addition to such solid material, molten iron may be additionally charged as part of the material.

Next, the furnace roof 4 is placed and the arc electrodes 5 are inserted into the furnace body 1. A configuration may be adopted, in which the arc electrodes 5 are attached to the furnace roof 4 and the furnace roof 4 and the arc electrodes 5 are together placed on the furnace body 1.

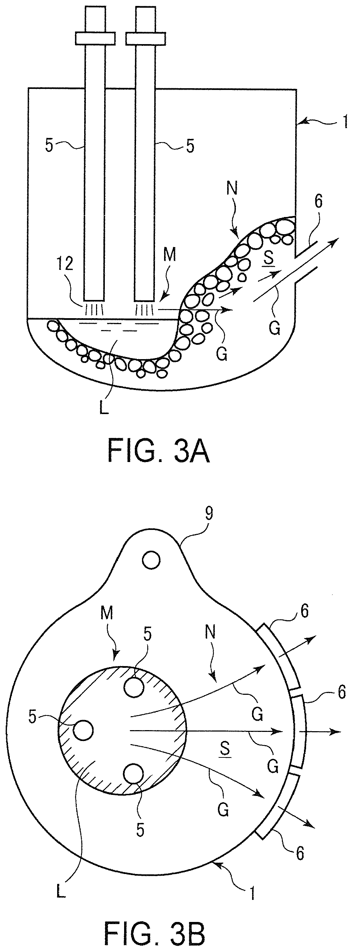

In this state, the arc electrodes 5 are energized to form electric arcs 12, whereby the material S is melted. The arc electrodes 5 are arranged so that the center of arc heating is laterally offset from the center of the furnace body 1 in a horizontal plane with respect to the furnace body 1. As shown in FIGS. 3A and 3B, the material S in the region M at and near the center of arc heating, which is laterally offset from the center of the furnace body 1, is melted by the electric arcs 12. In the region N on the side opposite to the arc electrodes 5 in the furnace body 1, however, this region N is apart from the arc electrodes 5 and therefore, the material S in the region N is not melted. In this state, the exhaust gas in the furnace body 1 is discharged through the exhaust ports 6 that are provided in the side wall of the furnace body 1 on the side opposite to the offset direction of the arc electrodes 5, at a height below the level, to which the material is present. For this reason, as shown in FIGS. 3A and 3B, the exhaust gas flow G heated to a high temperature by arc heating flows through the spaces between lumps of the material S not melted and is discharged through the exhaust ports 6. In this way, the heat of the high-temperature exhaust gas flow G is absorbed by the material S, whereby the material S is preheated.

During the arc heating, O₂ gas is supplied through the lances 10 to help melt the material S. When the melting proceeds and molten metal L accumulates in the furnace, the carbon material, which serves as an auxiliary heat source, is injected into the slag through the lances 10, that is, operation enters the slag forming operation. The tip portions of the arc electrodes 5 are then buried in the slag to form the submerged electric arcs 12 in the slag. The carbon material, which serves as the auxiliary heat source, reacts with the supplied oxygen to contribute to the melting of the material S.

In this way, the material S is melted by the heating via the electric arcs 12, the heat of the molten metal L formed by the electric arcs 12, and the high-temperature gas flow G. The material S in the region N on the side opposite to the arc electrode 5-side in the furnace body 1 is preheated by the high-temperature exhaust gas and the heat transferred from the molten metal helps the melting proceed. In view of the entire heat balance, it is preferable that the material S be additionally heated using the burners 11 in the region, in which the residue not melted is likely to remain. When all the material S has been melted, the furnace body 1 is tilted to discharge the molten metal through the tap hole 9.

In this embodiment, the arc electrodes 5 are arranged so that the center of arc heating is offset from the center of the furnace body 1, and the exhaust gas in the furnace body 1 is discharged through the exhaust ports 6 that are provided in the side wall of the furnace body 1 on the side opposite to the offset direction of the arc electrodes 5 at a height below the level, to which the material S is present. Thus, the heat of the exhaust gas heated to a high temperature by arc heating is absorbed by the material S not melted and contributes to the preheating of the material S, so that it is possible to effectively use the high-temperature gas flow to reduce the electric power consumption rate. In conventional arc furnaces, the center of the heating by the arc electrodes coincides with the center of the furnace body and the exhaust gas is discharged upward through a duct connected to the furnace roof and therefore, the high-temperature exhaust gas having sensible heat is directly discharged into the outside of the furnace body. In this embodiment, however, the sensible heat of the high-temperature exhaust gas is effectively used in the preheating until the end of the melting of the material S. Moreover, it suffices to change the positions of insertion of the arc electrodes 5 and the positions of the exhaust ports 6 as compared to the conventional arc furnace, so that it is not required to significantly change the existing facility.

As described above, in this embodiment, it is preferable that the furnace body 1 be configured so that, in a state where the furnace roof 4 is placed, the furnace body 1 has a quasi-closed structure. This facilitates formation of the flow from a melting region, in which melting by the arc electrodes 5 is performed, toward the exhaust ports 6. Such a quasi-closed structure makes the sum of the amount of oxygen gas from the lances 10 and the amount of air introduced through the burners 11 and the small spaces balance with the amount of exhaust gas discharged through the exhaust ports 6.

It is preferable that the height of the lowermost portion of the exhaust ports 6 be close to the surface of the molten metal L. In particular, it is preferable that the height of the lowermost portion of the exhaust ports 6 be set within a range of 500 mm to 1 m above the sill level of the molten metal surface. When the exhaust ports 6 are provided at such positions, it is made possible to cause the high-temperature exhaust gas to flow through the material S longer until the end of the melting, which enhances the effect of preheating.

In order to maximize the effect of preheating the material, it is preferable that, without additional charge of the material, which is performed in the operation of common arc furnaces, all the material of one batch be charged at a time (one time charge). For this purpose, it is preferable that the volume of the furnace body 1 be made to be approximately twice those of common arc furnaces by making the height of the furnace body 1 be 20% to 40% higher than common arc furnaces and making the base area of the furnace body 1 greater than common arc furnaces. In the case of a 70-ton furnace, for example, the volume of the furnace body 1 is determined as if it is a 140-ton furnace. Specifically, the diameter of a 70-ton furnace, which is conventionally 5,800 mmφ, is set at 7,300 mmφ.

In order to enhance the effect of preheating, it is preferable that the center of heating performed via the arc electrodes 5 be offset by an amount corresponding to 20% to 30% of the diameter of the furnace body. Note that, in order to protect the furnace wall, it is preferable that the furnace wall and the arc electrodes 5 be spaced apart from each other by an amount nearly equal to those of conventional AC furnaces (multiple-time-charge furnaces, in which the material is charged multiple times during one batch).

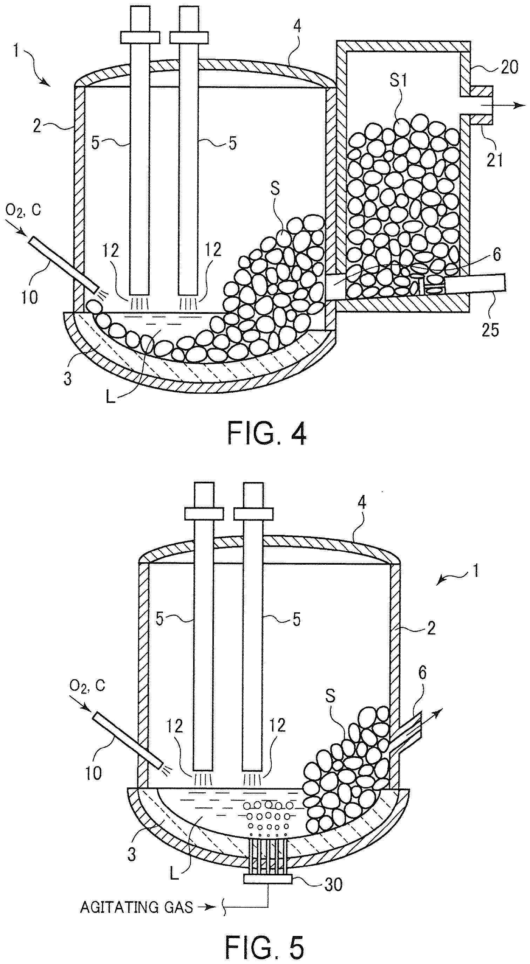

When the height of the furnace body 1 is increased in order to perform the one-time charge, the length of the arc electrodes 5 necessarily increases and there is therefore a possibility that the arc electrodes 5 are broken by the material having high bulk density (equal to or higher than 1.0 ton/m³; hereinafter referred to as high-density material) during charging of the material. In order to prevent such breakage of the arc electrodes 5, it is preferable to provide, next to the furnace body 1, a charging chamber 20 to charge the high-density material S1 as shown in FIG. 4. Since the high-density material is small in specific surface area and is hard to be oxidized, it is preferable to provide the charging chamber 20 at the portion of the side wall of the furnace body 1, in which the exhaust ports 6 are formed, as described in FIG. 4. This makes it possible to preheat the high-density material by the exhaust gas discharged through the exhaust ports 6 without the fear of oxidation. In this case, as shown in FIG. 4, the arc furnace is designed so that the exhaust gas after being used to preheat the material in the furnace is discharged into the charging chamber 20 through the exhaust ports 6 to make it possible to preheat the high-density material S1 in the charging chamber 20 and the exhaust gas in the charging chamber 20 is discharged through a vent 21 in a side portion of the charging chamber 20. The high-density material S1 can be charged from the charging chamber 20 into the furnace body 1 with the use of a pusher 25 through the exhaust ports 6 in a lower portion. The material having a low bulk density (lower than 1.0 ton/m³) may be charged via a bucket through the upper opening of the furnace body 1 because the possibility of breakage of the arc electrodes 5 is low in this case.

In order to accelerate the melting of the material S on the side opposite to the arc electrodes 5-side in the furnace body 1, it is preferable to provide a gas blowing plug 30 for blowing agitating gas in the bottom portion 3 to agitate the molten metal L by gas bubbling as shown in FIG. 5.

As a result of actually operating the arc furnace according to this embodiment, it has been found that it is possible to reduce the electric power consumption rate by approximately 75 to 100 kWh/t as compared to a conventional arc furnace. Specifically, it has been found that the electric power consumption rate of a conventional arc furnace is 350 to 400 kWh/t, whereas the electric power consumption rate of the arc furnace of this embodiment was reduced to approximately 250 to 325 kWh/t.

Note that the present invention is not limited to the above described embodiment and various modifications can be made. For example, when it is not feared that the residue not melted remains, there is no need to provide the burners 11.

Although the above described embodiment illustrates an example using an AC arc furnace, a direct current (DC) arc furnace may be employed. In the case of a DC arc furnace, a furnace-bottom electrode is provided and voltage is applied between the furnace-bottom electrode and an arc electrode or arc electrodes. For this reason, the number of arc electrodes is not limited and it suffices that this number is at least one.

In the above description of the embodiment, a steel-making arc furnace has been described. However, the present invention is not limited to the steel-making arc furnace, but can be applied to an arc furnace for melting another kind of metal.

In the above described embodiment, the carbon material is injected through the lances. However, lump coke, ASR, etc. may be charged as the carbon material through the charging port in the furnace roof 4.

In the case of a steel-making arc furnace, a configuration may be adopted, in which an oxygen lance is inserted in a manner similar to that of the arc electrodes to perform oxygen blowing. In this case, the arc electrodes 5 may be arranged at three apexes of a square and the oxygen lance may be inserted at the position corresponding to the remaining apex of the square.

### [Description of Reference Numerals]

- 1;: furnace body
- 2;: wall portion (furnace shell)
- 3;: bottom portion
- 4;: furnace roof
- 5;: arc electrode
- 6;: exhaust port
- 7;: exhaust duct
- 7a;: damper
- 8;: fan
- 9;: tap hole
- 10;: lance
- 11;: burner
- 12;: arc
- 20;: charging chamber
- 21;: vent
- 25;: pusher
- 30;: gas blowing plug
- L;: molten metal
- S;: material

## Claims

1. An arc furnace for melting material by electric arcs formed by energizing an arc electrode (5), comprising:
a furnace body (1) configured to be charged with the material to be melted;
a furnace roof (4) that closes an upper opening of the furnace body (1);
the arc electrode (5) that is inserted into the furnace body (1) from above the furnace roof (4) and is energized to form the electric arcs to melt the material; and
an exhaust port (6), through which exhaust gas in the furnace body (1) is discharged, the arc furnace being **characterized in that** the furnace roof (4) is configured such that the material can be charged into the furnace body (1) via a bucket, with the furnace roof (4) removed,
the arc electrode (5) is arranged so that a center of arc heating is laterally offset from a center of the furnace body (1) in a horizontal plane with respect to the furnace body (1);
the exhaust port (6) is provided in a side wall of the furnace body (1) on a side opposite to an offset direction of the arc electrode (5), in which direction the arc electrode (5) is offset, at a height such that a height of a lowermost portion of the exhaust port (6) is set within a range of 500 mm to 1 m above a sill level of the molten metal surface so that the exhaust gas produced by the arc heating by the arc electrode (5) is discharged from the exhaust port (6) through spaces between lumps of the material charged into the furnace body (1).

2. The arc furnace according to claim 1, wherein a plurality of the exhaust ports (6) are provided.

3. The arc furnace according to claim 1 or 2, wherein the furnace body (1) is configured so that, in a state where the furnace roof (4) is placed, the furnace body (1) is closed except a space between the furnace roof (4) and a wall portion (2) of the furnace body (1) and a space between the arc electrode (5) and an electrode hole thereof.

4. The arc furnace according to any one of claims 1 to 3, further comprising
a burner (11), provided in the side wall of the furnace body (1), for heating the material in the furnace body (1).

5. The arc furnace according to any one of claims 1 to 4, further comprising a charging chamber (20), provided beside the furnace body (1), for charging the material, the charging chamber being provided next to the side wall of the furnace body (1), in which the exhaust port (6) is formed.

6. A method of melting material by using an arc furnace for melting the material by electric arcs formed by energizing an arc electrode (5), the arc furnace comprising
a furnace body (1) configured to be charged with the material to be melted;
a furnace roof (4) that closes an upper opening of the furnace body (1);
the arc electrode (5) that is inserted into the furnace body (1) from above the furnace roof (4) and is energized to form the electric arcs to melt the material; and
an exhaust port (6), through which exhaust gas in the furnace body (1) is discharged, the method being **characterized in that**
the material being charged into the furnace body (1) via a bucket, with the furnace roof (4) removed,
the arc electrode (5) is arranged so that a center of arc heating is laterally offset from a center of the furnace body (1) in a horizontal plane with respect to the furnace body (1);
the exhaust port (6) is provided in a side wall of the furnace body (1) on a side opposite to an offset direction of the arc electrode (5), in which direction the arc electrode (5) is offset, at a height such that a height of a lowermost portion of the exhaust port (6) is within a range of 500 mm to 1 m above a sill level of the molten metal surface; and
the method comprises discharging the exhaust gas produced by the arc heating by the arc electrode (5) from the exhaust port (6) through spaces between lumps of the material charged into the furnace body (1) to preheat the material.

7. The method according to claim 6, wherein
the exhaust port (6) is provided in plurality, and
the method further comprises performing at least one of switching among the exhaust ports (6) and regulating of a quantity of exhaust gas discharged from each exhaust port (6).

8. The method according to claim 6 or 7, wherein
the arc furnace further comprises a lance (10) for blowing 02 gas into molten metal formed by the melting by the electric arcs from the arc electrode (5), and
the method further comprises injecting carbon material via the lance (10) or another lance.

9. The method according to any one of claims 6 to 8, further comprising
charging all the material of one batch at a time, and
performing operation without additional charge of the material.

10. The method according to any one of claims 6 to 8. wherein
a charging chamber (20) for charging the material is provided beside the furnace body (1), next to the side wall of the furnace body (1), in which the exhaust port (6) is formed, and
the method further comprises charging the material having a bulk density of at least 1.0 ton/m³ from the charging chamber (20) into the furnace body (1) through the exhaust port (6).

## Patentansprüche

1. Lichtbogenofen zum Schmelzen von Material durch elektrische Lichtbögen, die durch Energiezuführen an eine Lichtbogenelektrode (5) ausgebildet werden, umfassend:
einen Ofenkörper (1), der ausgestaltet ist, um mit dem zu schmelzenden Material beladen zu sein;
eine Ofendecke (4), die eine obere Öffnung des Ofenkörpers (1) verschließt;
die Lichtbogenelektrode (5), die in den Ofenkörper (1) von oberhalb der Ofendecke (4) eingeführt ist und an die Energie zugeführt wird, um die elektrischen Lichtbögen auszubilden, um das Material zu schmelzen; und
eine Auslassöffnung (6), durch welche Abgas in dem Ofenkörper (1) abgelassen wird, wobei der Lichtbogenofen **dadurch gekennzeichnet ist, dass** die Ofendecke (4) derart ausgestaltet ist, dass das Material, mit der Ofendecke (4) entfernt, über einen Eimer in den Ofenkörper (1) geladen werden kann,
wobei die Lichtbogenelektrode (5) so angeordnet ist, dass eine Mitte der Lichtbogenerwärmung von einer Mitte des Ofenkörpers (1) in einer horizontalen Ebene in Bezug auf den Ofenkörper (1) seitlich versetzt ist;
wobei die Auslassöffnung (6) in einer Seitenwand des Ofenkörpers (1) auf einer Seite gegenüberliegend zu einer Versatzrichtung der Bogenelektrode (5) vorgesehen ist, in welcher Richtung die Bogenelektrode (5) versetzt ist, an einer derartigen Höhe, dass eine Höhe eines niedrigsten Abschnitts der Auslassöffnung (6) innerhalb eines Bereichs von 500mm bis 1m oberhalb eines Schwellenniveaus der Oberfläche des geschmolzenen Metalls festgelegt ist, so dass das durch die Lichtbogenerwärmung durch die Lichtbogenelektrode (5) produzierte Abgas aus der Auslassöffnung (6) durch Räume zwischen Klumpen des Materials, das in den Ofenkörper (1) geladen ist, abgelassen wird.

2. Lichtbogenofen nach Anspruch 1, wobei eine Vielzahl der Auslassöffnungen (6) vorgesehen ist.

3. Lichtbogenofen nach Anspruch 1 oder 2, wobei der Ofenkörper (1) so ausgestaltet ist, dass, in einem Zustand wo die Ofendecke (4) platziert ist, der Ofenkörper (1) verschlossen ist, mit Ausnahme eines Raums zwischen der Ofendecke (4) und einem Wandabschnitt (2) des Ofenkörpers (1) und eines Raums zwischen der Lichtbogenelektrode (5) und einem Elektrodenloch davon.

4. Lichtbogenofen nach einem der Ansprüche 1 bis 3, ferner mit einem Brenner (11), der in der Seitenwand des Ofenkörpers (1) vorgesehen ist, zum Erwärmen des Materials in dem Ofenkörper (1).

5. Lichtbogenofen nach einem der Ansprüche 1 bis 4, ferner mit einer Beladungskammer (20), die neben dem Ofenkörper (1) vorgesehen ist, zum Beladen des Materials, wobei die Beladungskammer bei der Seitenwand des Ofenkörpers (1) vorgesehen ist, in welcher die Auslassöffnung (6) ausgebildet ist.

6. Verfahren zum Schmelzen von Material durch Verwenden eines Lichtbogenofens zum Schmelzen des Materials durch elektrische Lichtbögen, die durch Energiezuführen an eine Lichtbogenelektrode (5) ausgebildet werden, wobei der Lichtbogenofen umfasst:
einen Ofenkörper (1), der ausgestaltet ist, um mit dem zu schmelzenden Material beladen zu sein;
eine Ofendecke (4), die eine obere Öffnung des Ofenkörpers (1) verschließt;
die Lichtbogenelektrode (5), die in den Ofenkörper (1) von oberhalb der Ofendecke (4) eingeführt ist und an die Energie zugeführt wird, um die elektrischen Lichtbögen auszubilden, um das Material zu schmelzen; und
eine Auslassöffnung (6), durch welche Abgas in dem Ofenkörper (1) abgelassen wird, wobei das Verfahren **dadurch gekennzeichnet ist, dass** das Material, mit der Ofendecke (4) entfernt, über einen Eimer in den Ofenkörper (1) geladen wird,
wobei die Lichtbogenelektrode (5) so angeordnet ist, dass eine Mitte der Lichtbogenerwärmung von einer Mitte des Ofenkörpers (1) in einer horizontalen Ebene in Bezug auf den Ofenkörper (1) seitlich versetzt ist;
wobei die Auslassöffnung (6) in einer Seitenwand des Ofenkörpers (1) auf einer Seite gegenüberliegend zu einer Versatzrichtung der Bogenelektrode (5) vorgesehen ist, in welcher Richtung die Bogenelektrode (5) versetzt ist, an einer derartigen Höhe, dass eine Höhe eines niedrigsten Abschnitts der Auslassöffnung (6) innerhalb eines Bereichs von 500mm bis 1m oberhalb eines Schwellenniveaus der Oberfläche des geschmolzenen Metalls liegt; und
das Verfahren ein Ablassen des durch die Lichtbogenerwärmung durch die Lichtbogenelektrode (5) produzierten Abgases aus der Auslassöffnung (6) durch Räume zwischen Klumpen des Materials, das in den Ofenkörper (1) geladen ist, umfasst, um das Material vorzuerwärmen.

7. Verfahren nach Anspruch 6, wobei
die Auslassöffnung (6) in Mehrzahl vorgesehen ist, und
das Verfahren ferner ein Durchführen von zumindest einem Umschalten zwischen den Auslassöffnungen (6) und einem Regulieren einer Menge des von jeder Auslassöffnung (6) abgelassenen Abgases umfasst.

8. Verfahren nach Anspruch 6 oder 7, wobei
der Lichtbogenofen ferner eine Lanze (10) zum Einblasen von O2-Gas in geschmolzenes Metall umfasst, das durch das Schmelzen durch die elektrischen Lichtbögen von der Lichtbogenelektrode (5) ausgebildet wird, und
das Verfahren ferner ein Einspritzen von Carbon-Material über die Lanze (10) oder eine andere Lanze umfasst.

9. Verfahren nach einem der Ansprüche 6 bis 8, ferner umfassend
Beladen des ganzen Materials von einer Charge zu einer Zeit, und
Durchführen eines Betriebs ohne zusätzliche Beladung des Materials.

10. Verfahren nach einem der Ansprüche 6 bis 8, wobei
eine Beladungskammer (20) zum Beladen des Materials neben dem Ofenkörper (1) vorgesehen ist, bei der Seitenwand des Ofenkörpers (1), in welcher die Auslassöffnung (6) ausgebildet ist, und
das Verfahren ferner ein Beladen des Materials mit einer Schüttdichte von zumindest 1,0 Tonnen/m³ von der Beladungskammer (20) in den Ofenkörper (1) durch die Auslassöffnung (6) umfasst.

## Revendications

1. Four à arc pour faire fondre un matériau par des arcs électriques formés en excitant une électrode à arc (5), comprenant :
un corps de four (1) configuré pour être chargé avec le matériau devant être fondu ;
un toit de four (4) qui ferme une ouverture supérieure du corps de four (1) ;
l'électrode à arc (5) qui est insérée dans le corps de four (1) depuis le dessus du toit du four (4) et est excitée pour former les arcs électriques pour faire fondre le matériau ; et
un orifice d'échappement (6), à travers lequel du gaz d'échappement dans le corps de four (1) est évacué, le four à arc étant **caractérisé en ce que** le toit de four (4) est configuré de telle sorte que le matériau peut être chargé dans le corps de four (1) via un godet, avec le toit de four (4) enlevé,
l'électrode à arc (5) est agencée de telle sorte qu'un centre de chauffage à l'arc est décalé latéralement par rapport à un centre du corps de four (1) dans un plan horizontal par rapport au corps de four (1) ;
l'orifice d'échappement (6) est fourni dans une paroi latérale du corps de four (1) sur un côté opposé à une direction de décalage de l'électrode à arc (5), direction dans laquelle l'électrode à arc (5) est décalée, à une hauteur telle qu'une hauteur d'une partie la plus inférieure de l'orifice d'échappement (6) est établie dans une plage de 500 mm à 1 m au-dessus d'un niveau de seuil de la surface de métal fondu, de sorte que le gaz d'échappement produit par le chauffage à l'arc par l'électrode à arc (5) est évacué depuis l'orifice d'échappement (6) à travers des espaces entre des morceaux du matériau chargés dans le corps de four (1).

2. Four à arc selon la revendication 1, dans lequel une pluralité d'orifices d'échappement (6) sont fournis.

3. Four à arc selon la revendication 1 ou 2, dans lequel le corps de four (1) est configuré de telle sorte que dans un état dans lequel le toit de four (4) est mis en place, le corps de four (1) est fermé à l'exception d'un espace entre le toit de four (4) et une partie de paroi (2) du corps de four (1) et d'un espace entre l'électrode à arc (5) et un trou d'électrode de celui-ci

4. Four à arc selon l'une quelconque des revendications 1 à 3, comprenant en outre
un brûleur (11), fourni dans la paroi latérale du corps de four (1), pour chauffer le matériau dans le corps de four (1).

5. Four à arc selon l'une quelconque des revendications 1 à 4, comprenant en outre une chambre de chargement (20), fournie à côté du corps de four (1), pour charger le matériau, la chambre de chargement étant fournie à côté de la paroi latérale du corps de four (1) dans laquelle l'orifice d'échappement (6) est formé.

6. Procédé de fusion d'un matériau à l'aide d'un four à arc pour faire fondre le matériau par des arcs électriques formés en excitant une électrode à arc (5), le four à arc électrique comprenant
un corps de four (1) configuré pour être chargé avec le matériau devant être fondu ;
un toit de four (4) qui ferme une ouverture supérieure du corps de four (1) ; l'électrode à arc (5) qui est insérée dans le corps de four (1) depuis le dessus du toit de four (4) et est excitée pour former des arcs électriques pour faire fondre le matériau ; et
un orifice d'échappement (6), à travers lequel du gaz d'échappement dans le corps de four (1) est évacué, le procédé étant **caractérisé en ce que** le matériau est chargé dans le corps de four (1) via un godet, avec le toit de four (4) enlevé,
l'électrode à arc (5) est agencée de telle sorte qu'un centre de chauffage à l'arc est décalé latéralement par rapport à un centre du corps de four (1) dans un plan horizontal par rapport au corps de four (1) ;
l'orifice d'échappement (6) est fourni dans une paroi latérale du corps de four (1) sur un côté opposé à une direction de décalage de l'électrode à arc (5), direction dans laquelle l'électrode à arc (5) est décalée, à une hauteur telle qu'une hauteur de la partie la plus inférieure de l'orifice d'échappement (6) se situe dans une plage de 500 mm à 1 m au-dessus d'un niveau de seuil de la surface de métal fondu ; et
le procédé comprend une évacuation du gaz d'échappement produit par le chauffage à l'arc par l'électrode à arc (5) depuis l'orifice d'échappement (6) à travers des espaces entre des morceaux du matériau chargés dans le corps de four (1) pour le préchauffage du matériau.

7. Procédé selon la revendication 6, dans lequel
l'orifice d'échappement (6) est fourni en une pluralité, et
le procédé comprend en outre la réalisation d'au moins une parmi une commutation entre les orifices d'échappement (6) et une régulation d'une quantité de gaz d'échappement évacuée depuis chaque orifice d'échappement (6).

8. Procédé selon la revendication 6 ou 7, dans lequel
le four à arc comporte en outre une lance (10) pour souffler du gaz O₂ dans le métal en fusion formé par la fusion par les arcs électriques provenant de l'électrode à arc (5), et
le procédé comprend en outre l'injection d'un matériau de carbone via la lance (10) ou une autre lance.

9. Procédé selon l'une quelconque des revendications 6 à 8, comprenant en outre le chargement de tout le matériau d'un lot à la fois, et
la réalisation d'une opération sans charge supplémentaire du matériau.

10. Procédé selon l'une quelconque des revendications 6 à 8, dans lequel
une chambre de chargement (20) pour charger le matériau est fournie à côté du corps de four (1), à côté de la paroi latérale du corps de four (1) dans laquelle l'orifice d'échappement (6) est formé, et
le procédé comprend en outre le chargement du matériau ayant une densité apparente d'au moins 1,0 t/m³ à partir de la chambre de chargement (20) jusque dans le corps de four (1) à travers l'orifice d'échappement (6).
